# EUROPÄISCHE PATENTSCHRIFT

(11) **EP 1 655 248 B1**
(45) Veröffentlichungstag und Bekanntmachung des Hinweises auf die Patenterteilung: **09.05.2007**
(21) Anmeldenummer: 05023958.1
(22) Anmeldetag: 03.11.2005
(51) Int. Cl.: B65G 49/06, B65G 13/071, B65G 47/26

(54) **Antriebsvorrichtung für in einer Reihe angeordnete freidrehende Rollen oder für freilaufende Transportriemchen**
Driving mechanism for a series of free rollers or for free conveyor belts
Méchanisme d'entrainement d'une rangée de rouleaux fous ou de tapis roulants fous

(30) Priorität: 05.11.2004 DE 102004053600
(43) Veröffentlichungstag der Anmeldung: 10.05.2006
(73) Patentinhaber: HEGLA GmbH & Co. KG, 37688 Beverungen (DE)
(72) Erfinder: Vollbracht, Manfred, 37688 Beverungen (DE); Riepe, Dieter, 37688 Beverungen (DE); Rüschoff, Gerhard, 37671 Höxter (DE)
(74) Vertreter: Patentanwälte Dr. Solf & Zapf

(56) Entgegenhaltungen:
- EP-A- 0 506 198
- EP-A- 0 905 062
- EP-A- 1 323 651
- EP-A- 1 473 261
- CA-A1- 2 421 121
- DE-A1- 19 509 076
- US-A1- 2004 118 160
- US-A1- 2004 228 708

## Beschreibung

Die Erfindung betrifft eine Antriebsvorrichtung für in einer Reihe angeordnete freidrehende Rollen oder für freilaufende Transportriemchen, die z. B. in einer Beladevorrichtung zum sortierenden Beladen einer Speichereinrichtung mit plattenförmigem Material, insbesondere mit Glasscheiben, integriert sind.

Aus der EP 0 620 171 B1 ist eine Beladevorrichtung bekannt, die automatisch gesteuert mit einem schienengebundenen, auf einer stationären Führungsbahn verfahrbaren Sortierwagen, der zwei bis vier Glasscheiben aufnehmen kann, die aufgenommenen Glasscheiben quer zu einer Speichereinrichtung verfährt, die aus in genau definierter Position längs der Führungsbahn nebeneinander aufgestellten, in der Regel Stützrollenreihen aufweisenden Fächerwagen besteht und die Glasscheiben in ein vorbestimmtes Fach eines Fächerwagens schiebt. Diese Beladevorrichtung benötigt eine separate stationäre Stützwand, von der die einzelnen vertikal ausgerichteten Scheiben in den Sortierwagen gezogen werden. Unterhalb der Stützwand befindet sich eine Reihe von freidrehenden Stützrollen, auf welchen die Unterkante einer Glasscheibe aufsitzt.

Zur ergänzenden Beladung der Speicherfächer der Fächerwagen mit Sonderscheiben ist eine weitere, eine Stützrollenreihe aufweisende stationäre Beladevorrichtung vorgesehen, die eine Führung und eine an der Führung manuell verschiebbare und manuell positionierbare Luftkissenwand aufweist. An die Beladevorrichtung wird ein Fächerwagen manuell herangeführt. Dann wird die eine Sonderglasscheibe auf der Stützrollenreihe tragende Luftkissenwand manuell vor ein Fach des Fächerwagens gefahren und die Glasscheibe manuell eingeschoben.

Die Rollen der Stützrollenreihen sind passive Rollen, d. h. sie sind nicht angetrieben. Die Glasscheiben werden bei der Übergabe von an der Glasscheibe angreifenden Zangen gezogen oder geschoben, deren Mechanismus aufwändig ist und die einen erheblichen flächigen Raumbedarf in einer Vorrichtung erfordern.

Gleiche Stützrollenbahnen mit freilaufenden Stützrollen und freilaufenden Riemchentransportbändern sowie separate an der Glasscheibe angreifende Antriebsmittel werden auch in der EP 0 048 334 A1 beschrieben.

Eine Beladevorrichtung für Glasscheiben mit einem Förderband wird in US 2004/0118160 beschrieben.

Aufgabe der Erfindung ist, eine einfach aufgebaute Antriebsvorrichtung für freidrehende Rollen einer Stützrollenreihe oder eines freilaufenden Transportriemchens zu schaffen, die insbesondere für Beladevorrichtungen zum sortierenden Beladen einer Speichervorrichtung mit plattenförmigem Material, insbesondere mit Glasscheiben, geeignet und einfach aufgebaut ist sowie wenig flächigen Raum erfordert.

Diese Aufgabe wird durch die Merkmale des Anspruchs 1 gelöst. Vorteilhafte Weiterbildung der Erfindung werden in den Unteransprüchen gekennzeichnet.

Anhand der Zeichnungen wird die Erfindung im Folgenden schematisch und beispielhaft näher erläutert. Es zeigen:
Fig. 1 eine Seitenansicht einer für die erfindungsgemäße Antriebsvorrichtung geeigneten Beladevorrichtung mit einer zum Einschieben bereiten Glasscheibe;
Fig. 2 eine Seitenansicht der Beladevorrichtung mit teilweise eingeschobener Glasscheibe;
Fig. 3 eine Seitenansicht der Beladevorrichtung mit eingeschobener Glasscheibe;
Fig. 4 eine Draufsicht auf eine erste Ausführungsform der Beladevorrichtung, in der Fächerwagen positioniert sind;
Fig. 5 eine weitere Ausführungsform der Beladevorrichtung mit einer stationären Speichereinrichtung;
Fig. 6a-c schematisch eine Seitenansicht eines Details der Beladevorrichtung mit einer erfindungsgemäßen Antriebsvorrichtung;
Fig. 7a-c schematisch eine Seitenansicht einer weiteren Ausführungsform einer erfindungsgemäßen Antriebsvorrichtung;
Fig. 8a und b schematisch eine Vorderansicht einer erfindungsgemäßen Antriebsvorrichtung in abgesenkter, ausgekuppelter und hochgefahrener gekuppelter Stellung.

Die dargestellte Beladevorrichtung weist im Wesentlichen eine Speichereinrichtung 5 und eine Sortiervorrichtung 7 auf.

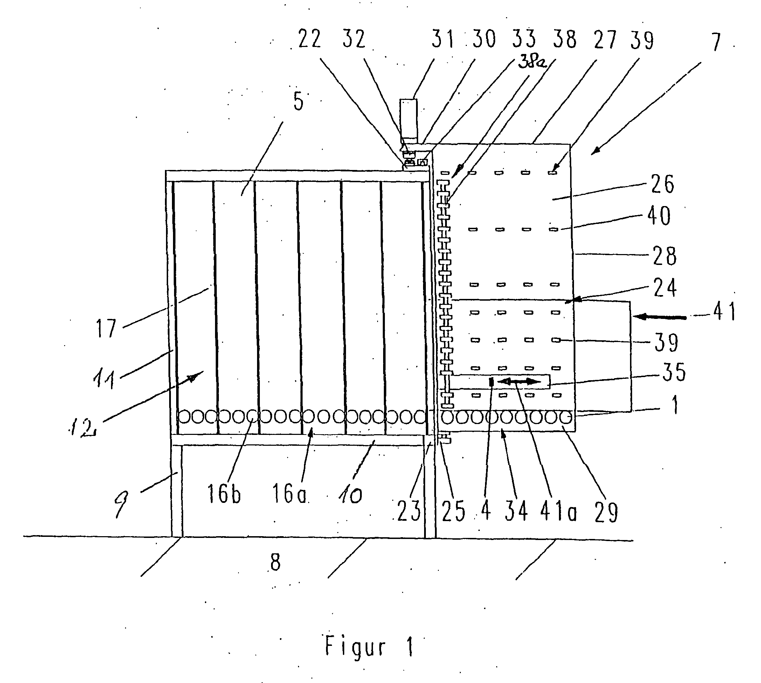

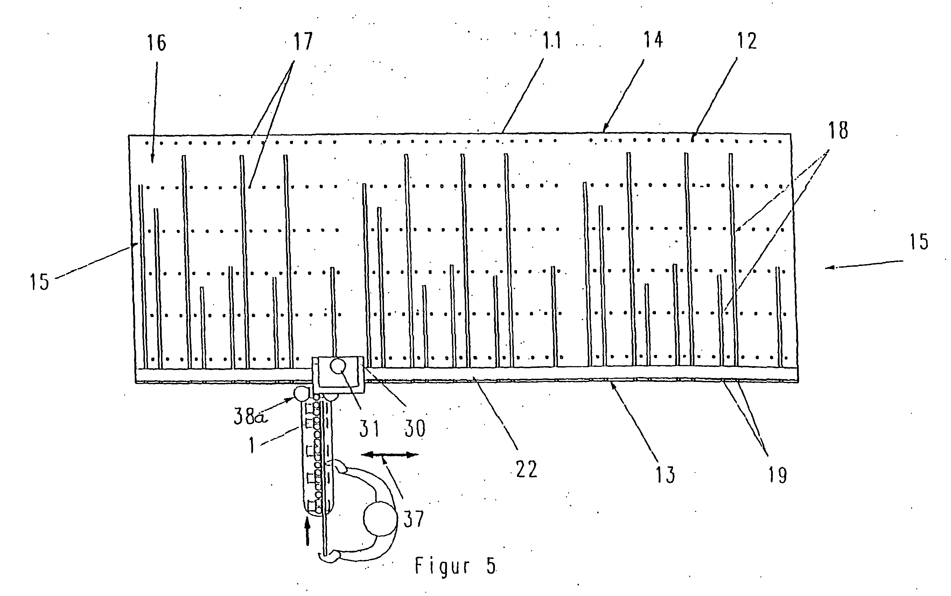

Die Speichereinrichtung 5 (Fig. 1, 5) ist im Abstand vom Boden 8 aufgebockt und lagert z. B. auf Füßen 9, auf denen ein horizontal rechteckiges Traggestell 10 ruht. Auf dem Traggestell 10 ist ein Rahmengestell 11 aufgebaut. Das Traggestell 10 und das Rahmengestell 11 umgrenzen einen quaderförmigen Beladeraum 12, mit einer Beladeseite 13, einer Rückseite 14 sowie zwei seitlichen Begrenzungen 15.

Der Beladeraum 12 ist in sich von der Beladeseite 13 zur Rückseite 14 erstreckende, parallel zueinander angeordnete beladeseitig und zweckmäßigerweise auch rückseitig offene Fächer 16 unterteilt, wobei die Unterteilung mit an sich bekannten Fächerbegrenzungselementen z. B. mit hintereinander gereihten z. B. mit Röllchen bestückten in Vertikalebenen angeordneten Stahldrähten 17 ausgebildet ist. Am Boden der Fächer 16 ist jeweils eine Stützrollenbahn 16a mit sich um senkrecht zur Erstreckung des Fachs 16 angeordneten horizontalen Achsen freidrehenden Stützrollen 16b vorgesehen. Anstelle der Stützrollen 16b können auch andere Förderelemente wie z. B. freilaufende abstützende Riemchentransportbänder eingebaut sein.

In die Fächer 16 werden Glasscheiben 18 einsortiert, deren Vorderkanten 19 zweckmäßigerweise seitlich fluchten.

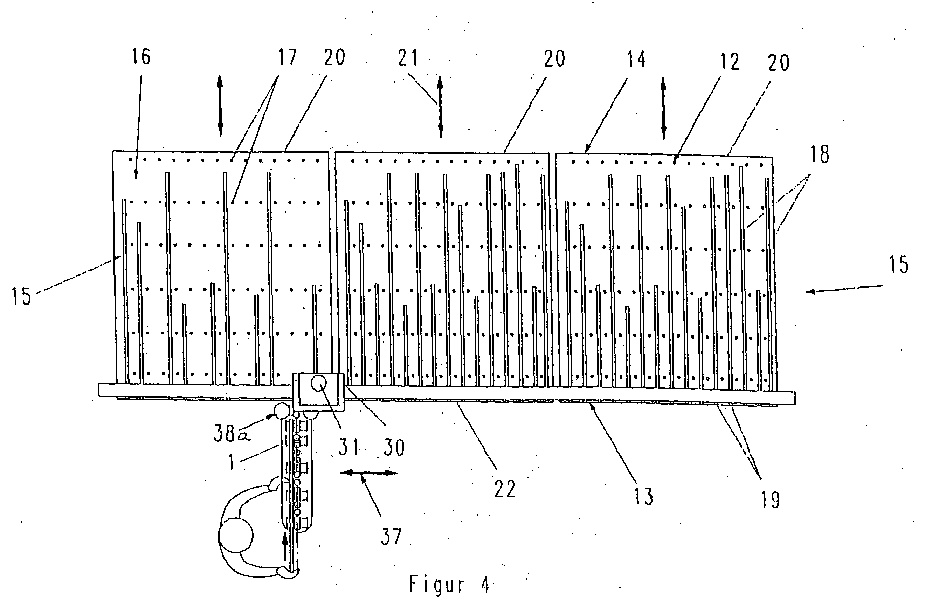

Eine Alternative der Speichereinrichtung 5 (Fig. 4) sieht vor, im Raum 12 der nicht vollständig durch Rahmenteile begrenzt sein muss, mehrere Fächerwagen 20 seitlich nebeneinander gestellt zu positionieren, die in Doppelpfeilrichtung 21 in den Raum 12 eingeschoben und herausgezogen werden können. Die Fächerwagen 20 sind in an sich bekannter Weise ausgestaltet und weisen ebenfalls Fächer 16 und Fächerbegrenzungselemente 17 auf.

Beladeseitig frontal steht die Sortiervorrichtung 7 in Doppelpfeilrichtung 37 seitlich verfahrbar mit der Speichereinrichtung 5 in Verbindung. Sie lagert oberseitig an einem Tragbalken 22 und stützt sich unterseitig, z. B. über mindestens eine Führungsrolle 25 an einem Führungsbalken 23 der Speichereinrichtung 5 ab (Fig. 1).

Die Sortiervorrichtung 7 weist ein vertikal oder etwas geneigt ausgerichtetes, plattenförmiges, senkrecht zur Beladefront ausgerichtetes Anlageelement 24 mit einer ebenen Beladeseite 26, einer Oberkante 27, einer freien Seitenkante 28 und einer Unterkante 29 auf. An der Oberkante 27 ist speichereinrichtungsseitig eine Kragplatte 30 angeordnet, die den Tragbalken 22 der Speichereinrichtung 5 überragt und die einen mit einer Programmsteuerung in Verbindung stehenden Motor 31 trägt. Der Motor treibt Antriebsmittel 32 an, die mit einer Linearführung 33 in Verbindung stehen, die an der Sortiereinrichtung 7, z. B. am Traggestell 10 angeordnet ist. Auf diese zweckmäßige Weise ist die Sortiervorrichtung 7 längs der Speichereinrichtung 5 verfahrbar.

Das Anlageelement 24 ist im Bereich oberhalb der Unterkante 29 mit einer der Ebene der Beladeseite 26 vorgeordneten Tragrollen 1 aufweisenden, horizontalen Rollenbahn 34 bestückt, wobei die Achsen der Rollen 1 senkrecht zur Ebene der Beladeseite 26 angeordnet sind und wobei die Rollenbahn 34 höhenmäßig mit den Rollenbahnen 16a der Speichereinrichtung 5 fluchtet.

Oberhalb der Rollenbahn 34 ist parallel dazu ausgerichtet eine Einschiebeeinrichtung 35 in den Oberflächenbereich der Beladeseite 26 des Anlageelements 24 eingebracht, die ein mit einer steuerbaren Antriebseinrichtung (nicht dargestellt) in Doppelpfeilrichtung 41a in Richtung Speichereinrichtung 5 verfahrbares Schiebeelement, z. B. einen Schiebefinger 4, aufweist, das aus der Ebene der Beladeseite 26 heraus- und wieder zurückfahrbar angeordnet ist.

Frontal vor der Speichereinrichtung 5 ist an der Sortiervorrichtung.7 eine vertikal ausgerichtete Führungseinrichtung für eine Glasscheibe 6 vorgesehen, die z. B. zwei seitlich nebeneinander auf Glasscheibenabstand angeordnete vertikale Führungssäulen 38a, z. B. mit im vertikalen Abstand voneinander angeordneten Führungsrollen 38, die um vertikale Achsen drehen, aufweist. Zweckmäßigerweise sind die Führungsrollen 38 mit einem Antriebsmittel (nicht dargestellt) antreibbar. Zweckmäßigerweise sind im Anlageelement 24 als Abstützelemente für eine Glasscheibe 6, z. B. in horizontalen Reihen 39 aus der Ebene der Beladeseite 26 vorstehende, um vertikale Achsen drehbare Röllchen 40 angeordnet. Ebenso zweckmäßig kann in Verbindung mit den Röllchen 40 oder anstelle der Röllchen 40 eine an sich bekannte Einrichtung vorgesehen sein, die ein Luftkissen auf der Beladeseite 26 aufbaut und/oder einen Unterdruck erzeugt.

Die Sortiervorrichtung 7 ist doppelseitig verwendbar ausgeführt (Fig. 4, 5). Dementsprechend befinden sich Rollenbahnen 34 und Abstützelemente, z. B. drehbare Röllchen 40 in horizontalen Reihen 39 beidseits des Anlageelements 24, so dass Glasscheiben sowohl von der einen als auch von der anderen Seite auf Rollenbahnen 34 gestellt werden können. Diese Ausführungsform hat den Vorteil, dass beschichtete Scheiben nicht gewendet zu werden brauchen. Sie können zur Pärchenbildung mit einer unbeschichteten Scheibe in ein benachbartes Fach so eingeschoben werden, dass zur Pärchenbildung keinerlei Wendevorgänge erforderlich sind.

Die Beladevorrichtung arbeitet wie folgt.

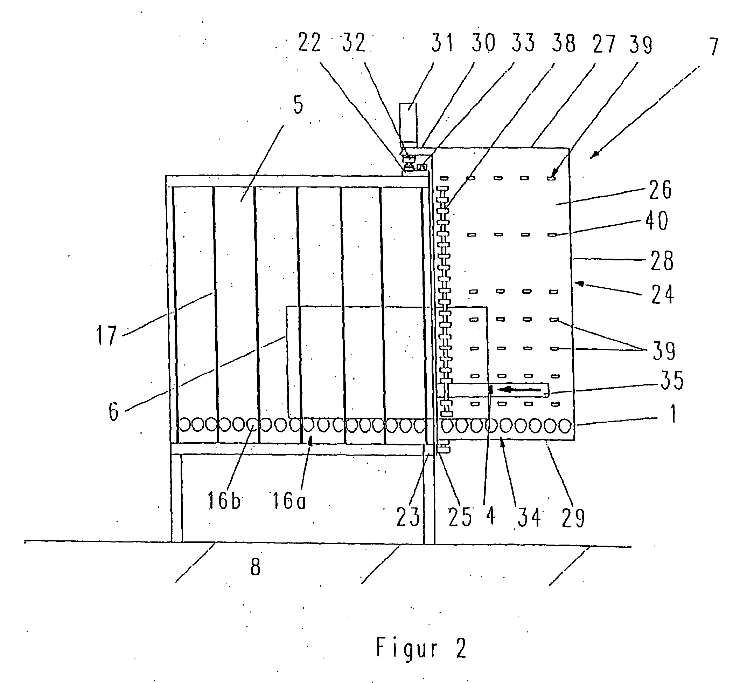

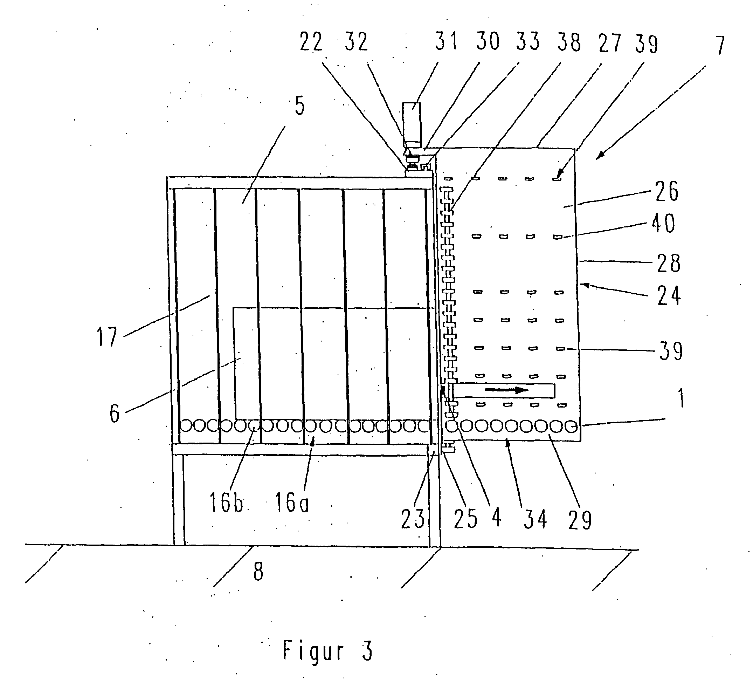

Auf die Rollenbahn 34 wird eine Glasscheibe 6 gestellt. Die Sortiervorrichtung 7 verfährt programmgesteuert vor ein vorbestimmtes Fach 16. Die Glasscheibe wird von Hand oder - im Falle von z. B. angetriebenen Rollen 1 - automatisch in Pfeilrichtung 41 (Fig. 1) ein Stück in Richtung des vorbestimmten Fachs 16 geschoben. Anschließend fährt der Schiebefinger 4 automatisch gesteuert aus (Fig. 2), hintergreift die Glasscheibe 6 und schiebt sie vollständig auf eine vorbestimmte Position in das Fach 16. Dabei wird die Glasscheibe durch die Führungswalzen 38 geführt und gegebenenfalls zusätzlich angetrieben. Danach fährt der Finger 4 wieder in seine Ausgangsposition zurück (Fig. 3).

Die Beladevorrichtung erleichtert das Einsortieren von Glasscheiben oder Plattenmaterial in einen vertikalen oder unter einem bestimmten Winkel zur vertikalen geneigten Speicher. Die Sortiervorrichtung befindet sich auf der Beladeseite der Speichereinrichtung und ist quer zur Speichereinrichtung verfahrbar. Vorteilhaft ist, dass die erfindungsgemäße Sortiervorrichtung mit einfachen Mitteln an eine bereits bestehende, stationäre Speichereinrichtung montiert werden kann.

Die Beladevorrichtung kann zur manuellen oder vollautomatischen Beschickung ausgebildet sein. Im Falle der manuellen Beschickung nimmt ein Bediener von einer Förderstrecke eine Glasscheibe ab. Die Sortiervorrichtung hat von der Programmsteuerung einen Impuls bekommen und ist zu einem bestimmten Fach gefahren. Über eine optische Anzeige kann dem Bediener die Lage der Ober- bzw. Unterseite einer Glasscheibe im Speicher angezeigt werden. Der Bediener setzt die Glasscheibe entsprechend auf den Transportrollen 1 ab und lehnt sie gegen das Anlageelement 24. Danach schiebt er die Glasscheibe in die Speichereinrichtung 5. Die vertikale Führungseinrichtung 37 gewährleistet den mittigen Einschub in ein Speicherfach 16. Wenn sich die Glasscheibenhinterkante kurz vor der vertikalen Führungseinrichtung 37 befindet, schwenkt der Einschiebefinger 4 aus der Ebene der Beladeseite 26 heraus und schiebt die Glasscheibe mit der Hinterkante lagegenau in das Speicherfach 16. Der Bediener quittiert den Vorgang der Steuereinrichtung und die Steuerung übermittelt die Position für den nächsten Einschubvorgang. Danach fährt die Sortiervorrichtung auf die nächste, vorgegebene Position.

Wesentlich ist, dass eine programmierbare Steuerungseinheit mit der Beladevorrichtung, insbesondere mit dem Motor 31 und weiteren Schaltelementen der Sortiervorrichtung in Verbindung steht. Des Weiteren sind Positionserkennungseinrichtungen an der Sortiervorrichtung und an der Speichereinrichtung für das Erkennen der Position der Sortiervorrichtung vorgesehen.

Die Sortiervorrichtung weist zweckmäßigerweise ein Dateneingabegerät (nicht dargestellt) auf, das mit der Steuereinrichtung der Beladevorrichtung in Verbindung steht. Des Weiteren ist die Sortiervorrichtung 7 zweckmäßigerweise schienengeführt und schienengebunden an der Speichereinrichtung 5 angeordnet, wobei vorteilhaft ist, wenn die Linearführung 33 in die Schienenführung der Speichereinrichtung integriert ist.

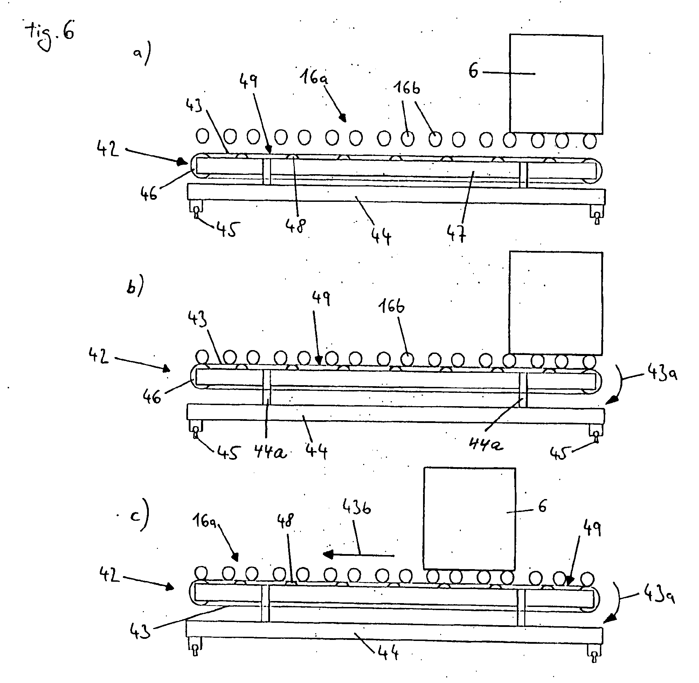

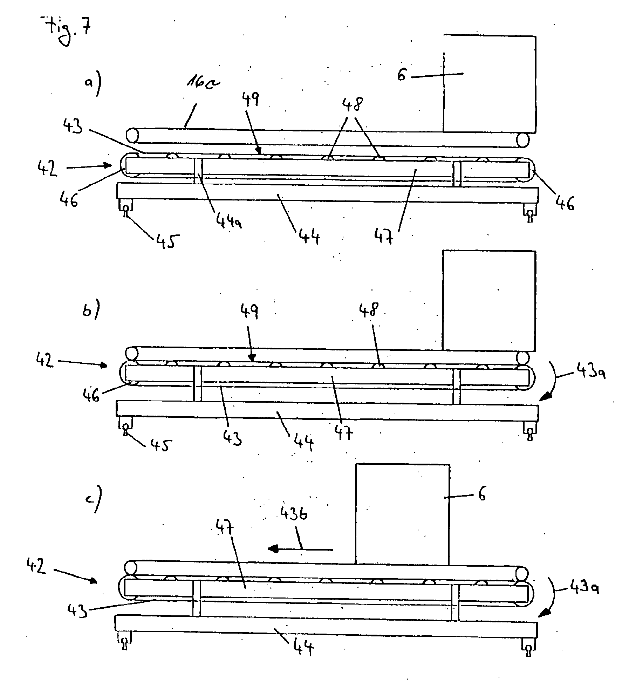

Unter der Speichereinrichtung 5 befindet sich eine erfindungsgemäße Antriebsvorrichtung 42 mit einem an die Rollen 16b einer Rollenbahn 16a beziehungsweise an ein Riemchentransportband 16c ankuppelbaren, endlosen Antriebsriemen 43 (Figur 6a, 7a). Die Antriebsvorrichtung 42 ruht zweckmäßigerweise auf einem Tragebalken 44, der beispielsweise mit seinen Enden vorzugsweise mit Schienen 45 in Doppelpfeilrichtung 45a seitlich verschiebbar verbunden sind. Anstelle der Schienen sind auch andere übliche Linearführungen denkbar. Die Schienen 45 verlaufen parallel zu der Beladeseite der Speichereinrichtung 5. Die Antriebsvorrichtung 42 ist über eine Hebeeinrichtung 44a mit dem Tragebalken 44 verbunden. Der Antriebsriemen 43 wird durch zwei Endrollen 46 gespannt, die an einem Rahmengestell 47 um ihre Achse drehbar gelagert sind. Der Antriebsriemen 43 wird bevorzugt über einen z. B. an einer Endrolle 46 angekoppelten Motor (nicht dargestellt) in einer Umlaufrichtung 43a (Figur 6b, 7b) oder entgegengesetzt dazu angetrieben und ist vorteilhafterweise durch eine Reihe von im Rahmengestell 47 gelagerten Stützrollen 48 unter dem oberen Trum 49 abgestützt, deren Oberseiten zweckmäßigerweise mit den Oberseiten der Endrollen 46 fluchten und die einen geraden, abgestützten Verlauf des oberen Trums 49 des Antriebsriemens.43 gewährleisten. Die Abstützung kann aber auch durch unter dem oberen Trum 49 angeordnete Stützstege (nicht dargestellt) gewährleistet werden.

Vorteilhafterweise ist die Antriebsvorrichtung 42 mit der Sortiervorrichtung 7 parallel zur Beladeseite 13 der Speichereinrichtung 5 gemeinsam verfahrbar verbunden. In einer Variante ist die Antriebsvorrichtung 42 getrennt von der Sortiervorrichtung 7 durch einen Motor entlang den Schienen 45 bewegbar.

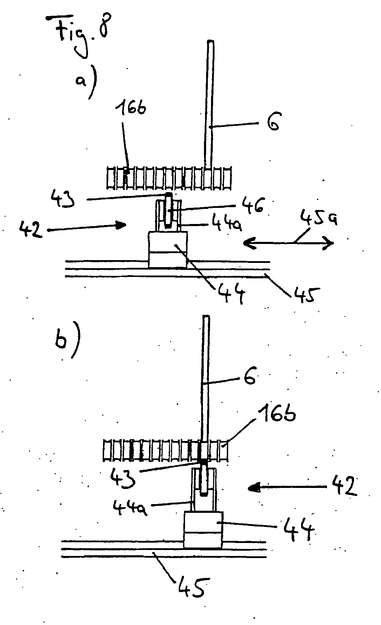

Zum Beladen eines Fachs 16 mit einer Glasscheibe 6 wird die Antriebsvorrichtung 42 in Doppelpfeilrichtung 45a unter das Fach 16 bewegt, das mit der Glasscheibe 6 beladen werden soll (Figur 8a). Dies geschieht entweder durch einen Motor oder dadurch, dass die Antriebsvorrichtung 42 zusammen mit der Sortiervorrichtung 7 vor das Fach 16 gefahren wird. Anschließend fährt die Hebevorrichtung 44a nach oben und drückt den Antriebsriemen 43 gegen die Rollen 16b der Rollenbahn 16a bzw. das Riemchentransportband 16c (Figur 6b, 7b, 8b). Nach Einschieben der Glasscheibe 6 ein Stück in Richtung des Fachs 16 mit Hilfe der Sortiervorrichtung 7 oder manuell treibt der Motor den Transportriemen 43 in Umlaufrichtung 43a, und treibt damit indirekt die Rollen 16b beziehungsweise das Riemchentransportband 16c am Boden des Fachs 16 an und fährt die Glasscheibe 6 in einer Einschiebrichtung 43b in das Fach 16 (Figur 6c, 7c).

Anschließend senkt die Hebeeinrichtung 44a die Antriebsvorrichtung 42 wieder auf ihre Ausgangslage ab, und die Antriebsvorrichtung 42 fährt zur nächsten vorgegebenen Position.

Mit der Antriebsvorrichtung 42 lässt sich eine Glasscheibe 6 auch aus einem Fach 16 herausfahren. Dies kann sowohl zur Beladeseite 13 als auch zur Rückseite 14 des Beladeraums 12 hin geschehen. Wegen der antreibbaren Stützelemente 16b, 16c der Fächer 16 bei dieser Ausführungsform der Beladevorrichtung lassen sich weiterhin mehrere kleinere Glasscheiben 6 in Einschiebrichtung 43b hintereinander in einem einzigen Fach 16 lagern, beispielsweise Glasscheiben 6 gleicher Abmessungen.

Die erfindungsgemäße Antriebsvorrichtung ist für alle Stützvorrichtungen, z. B. in Speicher- und/oder Transportvorrichtungen oder dergleichen, geeignet, die die Unterkanten vertikal ausgerichteter, plattenförmiger Elemente, z. B. Glasscheiben, auf frei von unten zugängigen, freidrehenden Stützrollenreihen oder auf freilaufenden Transportriemchen lagern. Speicher- und/oder Transportvorrichtungen können mit erfindungsgemäßen Antriebsvorrichtungen direkt werksseitig beim Hersteller kombiniert werden oder sie können durch einen entsprechenden Unterbau nachgerüstet werden, wobei die Anordnung unterhalb der Speicher- und/oder Transportvorrichtung oder dergleichen keinen seitlichen flächigen Raumbedarf erfordert, der in der Regel in einer Produktionsstätte knapp bemessen ist.

## Patentansprüche

1. Antriebsvorrichtung zum Ankuppeln an die Unterseite einer Reihe freidrehender Rollen oder eines freilaufenden Transportendlosriemchens, auf denen oberseitig eine gerade Unterkante mindestens eines vertikal ausgerichteten, plattenförmigen Elements, z. B. einer Glasscheibe, lagerbar ist und die Bestandteile einer Lager-, Sortier- oder Transportvorrichtung oder dergleichen Aufnahmevorrichtung für die plattenförmigen Elemente sind,
**dadurch gekennzeichnet, dass**
ein auf einem Traggestell (44) über eine Hebeeinrichtung (44a) angeordneter, motorbetriebener, endloser Antriebsriemen (43) vorgesehen ist, der unterhalb einer Rollenreihe oder eines freilaufenden Transportendlosriemchens der Aufnahmevorrichtung sich parallel zur Rollenreihe oder zum Transportendlosriemchen erstreckt.

2. Antriebsvorrichtung nach Anspruch 1,
**dadurch gekennzeichnet, dass**
das Traggestell auf Linearführungen, insbesondere auf Schienen (45) seitlich rechtwinklig zur Erstreckung des Antriebsriemens (43) verschiebbar angeordnet ist.

3. Antriebsvorrichtung nach Anspruch 1 und/oder 2,
**gekennzeichet durch**
einen Motorantrieb an der Antriebsvorrichtung für das seitliche Verschieben.

4. Antriebsvorrichtung nach einem oder mehreren der Ansprüche 1 bis 3,
**dadurch gekennzeichnet, dass**
der Antriebsriemen (43) durch zwei Endlosrollen (46) gespannt ist, die an einem Rahmengestell (47) drehbar gelagert sind.

5. Antriebsvorrichtung nach einem oder mehreren der Ansprüche 1 bis 4,
**dadurch gekennzeichnet, dass**
unter dem oberen Trum (49) des Antriebsriemens (43) im Rahmengestell (47) gelagerte Stützrollen (48) und/oder Stützstege angeordnet sind.

6. Antriebsvorrichtung nach einem oder mehreren der Ansprüche 1 bis 5,
**dadurch gekennzeichnet, dass**
sie unterhalb einer Lager- und/oder Sortier- und/oder Transportvorrichtung für plattenförmige Elemente, insbesondere für Glasscheiben, angeordnet ist, die vertikal ausgerichtete Fächer für die plattenförmigen Elemente nebeneinander angeordnet aufweisen, die jeweils am Boden eine Rollenreihe (16a) mit den freidrehenden Rollen (16b) oder ein Riemchentransportband aufweisen.

7. Antriebsvorrichtung nach Anspruch 6,
**dadurch gekennzeichnet, dass**
die Fächer (16) Fächer von an sich bekannten Fächer-wagen (20) sind, die seitlich nebeneinander gestellt in einer Speichereinrichtung (5) positioniert sind.

## Claims

1. Drive device for coupling to the lower side of a row of freely rotating rollers or of a freely running endless conveyor strip, on the upper side of which a straight lower edge of at least one vertically oriented, plate-shaped element, for example a glass pane, can be supported and which are components of a storage, sorting or transport device or similar receiving device for the plate-shaped elements, **characterized in that** a motor-operated endless drive belt (43) arranged on a supporting framework (44) via a raising arrangement (44a) is provided, which belt, below a roller row or a freely running endless conveyor strip of the receiving device, extends parallel to the roller row or to the endless conveyor strip.

2. Drive device according to Claim 1, **characterized in that** the supporting framework is arranged laterally displaceably at right angles to the extension of the drive belt (43) on linear guides, in particular on rails (45).

3. Drive device according to Claim 1 and/or 2, **characterized by** a motor drive on the drive device for the lateral displacement.

4. Drive device according to one or more of Claims 1 to 3, **characterized in that** the drive belt (43) is tensioned by two end rollers (46), which are mounted rotatably on a frame (47).

5. Drive device according to one or more of Claims 1 to 4, **characterized in that** supporting rollers (48) and/or supporting webs mounted in the frame (47) are arranged below the upper strand (49) of the drive belt (43).

6. Drive device according to one or more of Claims 1 to 5, **characterized in that** it is arranged below a storage and/or sorting and/or transport device for plate-shaped elements, in particular for glass panes, which has vertically oriented compartments for the plate-shaped elements arranged next to one another, which in each case have at the bottom a roller row (16a) with the freely rotating rollers (16b) or a strip conveyor belt.

7. Drive device according to Claim 6, **characterized in that** the compartments (16) are compartments of compartmented carriages (20) known per se, which are positioned in a storage arrangement (5) arranged laterally next to one another.

## Revendications

1. Mécanisme d'entraînement à coupler à la face inférieure d'une rangée de rouleaux fous ou d'un tapis roulant sans fin fou, sur lesquels on peut déposer, sur la face supérieure, une arête inférieure rectiligne d'au moins un élément en forme de plaque orienté verticalement, par exemple une feuille de verre, et qui sont des composants d'un dispositif de stockage, de triage ou de transport ou d'un dispositif de réception analogue pour les éléments en forme de plaques, **caractérisé en ce qu'**il est prévu une courroie d'entraînement sans fin (43), entraînée par un moteur, disposée sur un châssis de support (44) par l'intermédiaire d'un dispositif de levage (44a), et qui s'étend parallèlement à la rangée de rouleaux ou au tapis roulant sans fin en dessous d'une rangée de rouleaux ou d'un tapis roulant sans fin fou du dispositif de réception.

2. Mécanisme d'entraînement selon la revendication 1, **caractérisé en ce que** le châssis de support est disposé latéralement de façon déplaçable sur des guides linéaires, en particulier sur des rails (45), perpendiculairement à l'extension de la courroie d'entraînement (43).

3. Mécanisme d'entraînement selon la revendication 1 et/ou 2, **caractérisé par** un entraînement motorisé sur le mécanisme d'entraînement pour le déplacement latéral.

4. Mécanisme d'entraînement selon une ou plusieurs des revendications 1 à 3, **caractérisé en ce que** la courroie d'entraînement (43) est tendue par deux rouleaux d'extrémité (46), qui sont montés en rotation sur un châssis (47).

5. Mécanisme d'entraînement selon une ou plusieurs des revendications 1 à 4, **caractérisé en ce que** des rouleaux d'appui (48) et/ou des nervures d'appui montés dans le châssis (47) sont disposés en dessous du brin supérieur (49) de la courroie d'entraînement (43).

6. Mécanisme d'entraînement selon une ou plusieurs des revendications 1 à 5, **caractérisé en ce qu'**il est disposé en dessous d'un dispositif de stockage et/ou de triage et/ou de transport pour des éléments en forme de plaques, en particulier pour des feuilles de verre, qui présentent des cases orientées verticalement pour les éléments en forme de plaques, qui présentent chaque fois dans le fond une rangée de rouleaux (16a) avec les rouleaux fous (16b) ou un tapis roulant.

7. Mécanisme d'entraînement selon la revendication 6, **caractérisé en ce que** les cases (16) sont des cases de chariots à cases (20) bien connus, qui sont positionnés dans un dispositif d'accumulation (5) en étant placés latéralement l'un à côté de l'autre.
